# EUROPEAN PATENT APPLICATION

(11) **EP 1 195 785 A1**
(43) Date of publication of application: **10.04.2002**
(21) Application number: 00931668.8
(22) Date of filing: 02.06.2000
(51) Int. Cl.: H01G 9/038

(54) **NONAQUEOUS ELECTROLYTIC SOLUTION, ELECTRODE, AND CAPACITOR CONTAINING THE SAME**

(30) Priority: 04.06.1999 JP 15760499
(71) Applicant: Mitsui Chemicals, Inc., Tokyo 100-6070 (JP); MATSUSHITA ELECTRIC INDUSTRIAL CO., LTD., Kadoma-shi, Osaka 571-8501 (JP)
(72) Inventor: Mita, Satoko, Nagaura, Sodegaura-shi, Chiba 299-0265 (JP); Takamuka, Yoshinori, Fushimi-ku, Kyoto-shi, Kyoto 601-1373 (JP)
(74) Representative: HOFFMANN - EITLE
(86) International application number: JP0003582
(87) International publication number: WO0075941

(57) **Abstract**

In a solvent for an electrolyte of a capacitor, by using a compound having a silicon-containing group of the general formula (R¹, R², R³) Si-, together with an organic solvent such as carbonic ester, the capacitor which releases little gases from the solvent and possesses high withstand voltage and excellent charging/discharging cycle properties can be provided. The R¹, R², R³ stand for hydrogen, halogen, alkyl group, alkoxy group, etc. As examples of the compounds there can be cited 3-trialkylsilyl-2-oxazolidinone, N-trialkyl-silylimidazole, tris(trialkylsilyl) phosphate, allyl-trialkylsilane and alkyl-N-trialkylsilyl carbamate. A non-aqueous electrolytic solution comprising such compound is suitable particularly for an electric double layer capacitor.

## Description

### Technical Field of the Invention:

The present invention relates to a silicone compound-containing non-aqueous electrolytic solution for a capacitor, an electrode and a capacitor constructed thereof, and more particularly a non-aqueous electrolytic solution for a capacitor having high energy density and excellent withstand voltage and charging/discharging cycle properties, an electrode for a capacitor, and a capacitor constructed thereof.

### Background of the Invention:

An electric double layer capacitor, being a low-power direct current power source having an intermediate capacity ranked between a battery and an ordinary capacitor, is widely used as a backup power source for IC's and memories and a supplement or alternative to secondary batteries. Such new ideas have been conceived recently as to utilize electric double layer capacitors in newly introduced portable electronic devices such as VTR with a built-in camera, cellular phones and laptop computers. It is due to said trend that there is a demand mounting for development of electric double layer capacitors having higher energy densities.

The electric double layer capacitor, different from the battery which takes advantage of chemical reactions to generate electric energy, takes advantage of large capacities of electric double layers created in the interface between electrodes and the electrolytic solution, so as to serve as a power source by inputting/outputting electric charges generated in the double layers similarly to the process of charging/discharging of electricity in the case of the battery.

Such electric double layer capacitor is constructed of two leaves of electrode, a separator, and generally a corrosion resistant electrolytic solution. Namely, such capacitor is of such construction as is constructed of two leaves of electrode formed from a material having large surface areas such as activated carbon and a binder such as fluoroplastic which are disposed face-to-face with a porous separator being interposed in between with spaces between the electrodes and the porous separator and an interior of the porous separator, respectively, being filled up with an electrolytic solution.

Included in the category of such electrolytic solution are an aqueous solution-based electrolytic solution and an organic solvent-based electrolytic solution (non-aqueous electrolytic solution). The aqueous electrolytic solution having a withstand voltage of as low as about 1.2 V is not suitable for the electric double layer capacitor for which a high energy density is required. On the contrary, the organic solvent-based electrolytic solution (non-aqueous electrolytic solution) affords a possibility of producing a capacitor having a high energy density by virtue of its higher withstand voltage compared with the aqueous electrolytic solution.

The non-aqueous electrolytic solutions have been conventionally manufactured generally by mixing and dissolving an electrolyte, such as a tetrafluoroboric acid compound and tetraethyl ammonium compound, in a non-aqueous solvent such as cyclic carbonic ester having a high dielectric constant. Nevertheless, inasmuch as the cyclic carbonic ester solvent at an elevated temperature undergoes decarboxylation decomposition reaction which is normally accompanied by generation of a large volume of gases, it is said to shorten service life of the capacitor. Furthermore, such electrolytic solution not necessarily possesses a sufficient withstand voltage, and hence further improvement in charging/discharging cycle properties has been wanted.

### Description of the Invention:

Accordingly, it is an object of the present invention to provide a non-aqueous electrolytic solution for a capacitor which releases little amount of gases from a solvent for an electrolyte, possesses high withstand voltage and excellent charging/discharging cycle properties, and excels in its safety. It is another object of the present invention to provide an electrode for a capacitor and a capacitor in which said non-aqueous electrolytic solution is employed.

The present invention relates to a non-aqueous electrolytic solution for a capacitor comprising an electrolyte and a solvent for the electrolyte comprising a compound having therein a silicon-containing group represented by the following formula (1), particularly a non-aqueous electrolytic solution for an electric double layer capacitor.

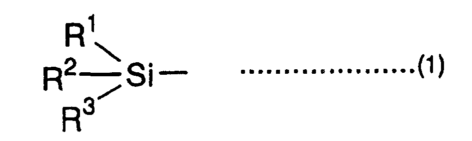

Wherein R¹, R², and R³ are each a monovalent group selected from the group consisting of hydrogen atom, halogen atom, hydrocarbon group having 1 - 6 carbon atoms, and oxyhydrocarbon group having 1 - 6 carbon atoms, wherein a hydrocarbon portion of said hydrocarbon group or oxyhydrocarbon group may be of a chain structure or cyclic structure and may be saturated or unsaturated and part of hydrogen atoms in the hydrocarbon portion may be substituted with halogen atom, and R¹, R², and R³ may be the same or different.

The compound having therein the silicon-containing group represented by the formula (1) is preferably a compound represented by the following formula (2). 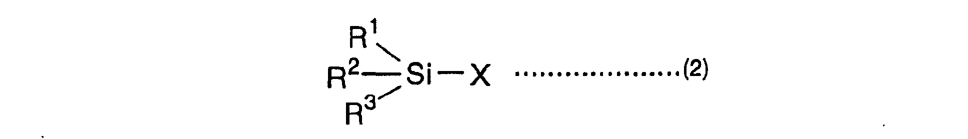 Wherein X is, as is mentioned later, a group selected from the group consisting of oxazolidinone group, imidazole group, phosphate group, phenyl group, alkoxy group, halogen atom, unsaturated alkyl group, carbamate group, and carbonate group, etc.

Among the above-identified compounds, particularly preferred as the solvent for electrolyte are N-trialkyl-silylimidazole, tris(trialkylsilyl) phosphate, 4-trialkyl-silylmethyl-1,3-dioxolan-2-one, trialkylchlorosilane, trifluoroalkyltrialkylsilane, allyltrialkylsilane, diallyldialkylsilane, triallylalkylsilane, acetyltrialkylsilane, alkyl-N-trialkylsilyl carbamate, alkyl-N,N-bistrialkylsilyl carbamate, alkyltrialkylsilyl carbonate, and 3-trialkylsilyl-2-oxazolidinone.

It is preferable that said compound having therein the silicon-containing group is used in the form of a mixed solvent prepared with another solvent, such as cyclic carbonic ester and phosphoric ester, in such manner that it is admixed by 0.01-50 % by weight in the mixed solvent.

Additionally, the present invention relates to a capacitor containing said non-aqueous electrolytic solution, particularly an electric double layer capacitor.

Furthermore, the present invention relates to an electrode for a capacitor which is pre-treated with said non-aqueous electrolytic solution and a capacitor into which such electrode is incorporated.

### Brief Description of the Drawings:

Figure 1 is a perspective view illustrating the construction of the roll-up type electric double layer capacitor element employed in Examples.
Figure 2 is a perspective view illustrating the mode of inserting the roll-up type electric double layer capacitor element employed in Examples into a metal container together with a closure member.

### Detailed Description of the Preferred Embodiments:

Detailed explanations are set forth as follows about the construction of the non-aqueous electrolytic solution, the electrode, and the capacitor constructed thereof. The non-aqueous electrolytic solution comprises of the electrolyte and the solvent for such electrolyte, and is suitable for the capacitor, particularly the electric double layer capacitor.

### Silicon Compounds

The non-aqueous electrolytic solution of the present invention comprises a compound having therein a silicon-containing group as represented by the following formula (1) as the solvent for electrolyte.

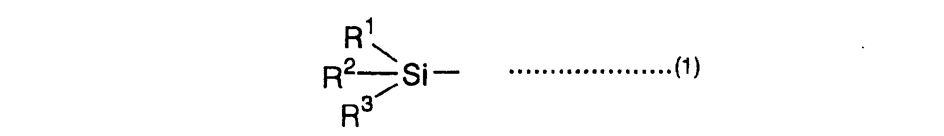

Wherein R¹, R², and R³ are each a monovalent group selected from the group consisting of hydrogen atom, halogen atom, hydrocarbon group having 1 - 6 carbon atoms such as alkyl group, and oxyhydrocarbon group having 1 - 6 carbon atoms such as alkoxy group, wherein a hydrocarbon portion of said hydrocarbon group or oxyhydrocarbon group may be of a chain structure or cyclic structure like that of phenyl group, and may be saturated or unsaturated and part of hydrogen atoms in the hydrocarbon portion may be substituted with halogen atom.

R¹, R², and R³ may be preferably a saturated or unsaturated hydrocarbon group having 1 - 6 carbon atoms, or more preferably an alkyl group having 1 - 3 carbon atoms. Part or all of hydrogen atoms in the alkyl group may be substituted with halogen atom, particularly fluorine atom. Said groups may be the same or different, but it is preferable that they are the same.

As specific examples of said groups there can be cited trimethylsilyl group, triethylsilyl group, tripropylsilyl group, trifluoromethylsilyl group and trimethoxysilyl group.

The compound having therein the silicon-containing group represented by the formula (1) is preferably a compound represented by the following formula (2). 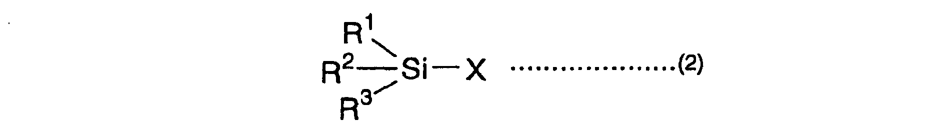 Wherein X is optionally selected from among the formulae (3) - (14) which are cited as follows, and constitutes any compound identified as (a) - (1).

### (a) Oxazolidinone compounds:

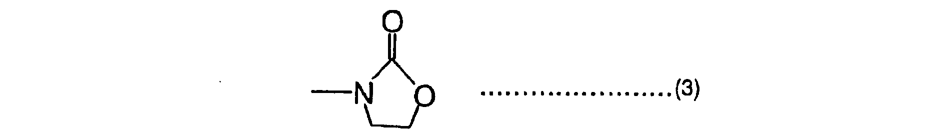

In the formula (3), part of hydrogen atoms may be substituted with saturated or unsaturated hydrocarbon group having 1- 4 carbon atoms, alkoxy group, amino group, cyano group, nitro group or halogen atom. Wherein the hydrocarbon group may have its part or all hydrogen atoms substituted with halogen atoms.

As specific examples of compounds having therein said groups there can be cited 3-trimethylsilyl-2-oxazolidinone, 3-trimethylsilyl-4-trifluoromethyl-2-oxazolidinone, and 3-triethylsilyl-2-oxazolidinone.

### ( b ) Imidazole compounds:

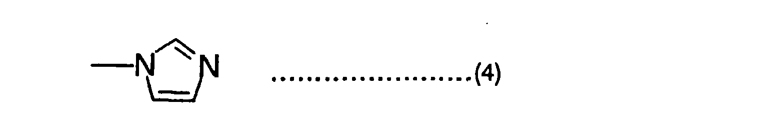

In the formula (4), part of hydrogen atoms may be substituted with a saturated or unsaturated hydrocarbon group having 1 - 4 carbon atoms, alkoxy group, amino group, cyano group, nitro group or halogen atom.

As specific examples of compounds having therein said groups there can be cited N-trimethylsilylimidazole, N-trimethylsilyl-4-methylimidazole, and N-triethylsilylimidazole.

### (c ) Phosphate compounds:

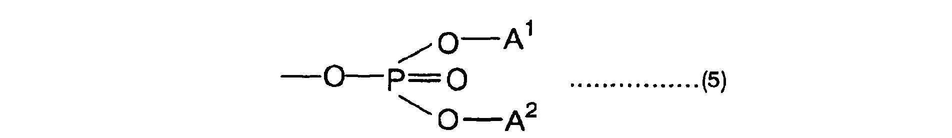

In the formula (5), A¹ and A² are each a saturated or unsaturated hydrocarbon group having 1 - 6 carbon atoms, or the silicon-containing group represented by the formula (1), which may be the same or different.

As specific examples of compounds having therein said groups there can be cited tris(trimethylsilyl) phosphate, tris-(triethylsilyl) phosphate, trimethylsilyldimethyl phosphate, and trimethylsilyldiallyl phosphate.

### ( d ) Cyclic carbonate compounds:

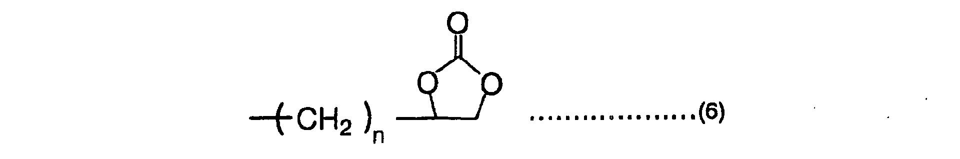

In the formula (6), part of hydrogen atoms which are bonded to carbon atoms constituting the cyclic structure may be substituted with a saturated or unsaturated hydrocarbon group having 1 - 4 carbon atoms, alkoxy group, amino group, cyano group, nitro group, halogen atom, or the silicon-containing group represented by the formula (1), wherein "n" is a number of 0, 1, or 2.

As specific examples of compounds having therein said groups there can be cited 4-trimethylsilyl-1,3-dioxolan-2-one, 4-trimethylsilyl-5-vinyl-1,3-dioxolan-2-one, and 4-trimethylsilylmethyl-1,3-dioxolan-2-one.

### (e) Phenyl compounds (1):

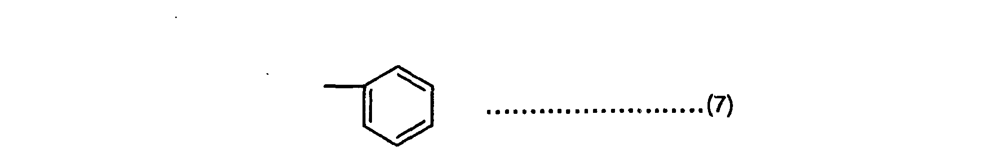

In the formula (7), part of hydrogen atoms which are bonded to carbon atoms constituting the benzene ring may be substituted with a saturated or unsaturated hydrocarbon group having 1 - 4 carbon atoms, alkoxy group, amino group, cyano group, nitro group, halogen atom, or the silicon-containing group represented by the formula (1).

As specific examples of compounds having therein said groups there can be cited phenyltrimethylsilane, phenyltriethylsilane, and phenyltrimethoxysilane.

### (f) Phenyl compounds (2):

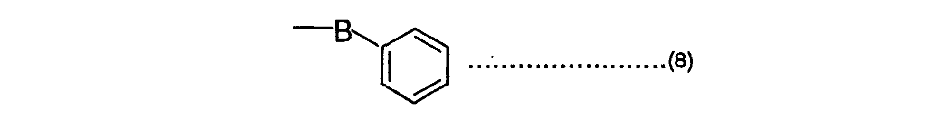

In the formula (8), B is any bivalent group selected from the group consisting of - NH -, - N(CH₃) -, - CH₂ -, - CO -, - S -, and - SO₂ -, wherein part of hydrogen atoms which are bonded to carbon atoms constituting the benzene ring may be substituted with a saturated or unsaturated hydrocarbon group having 1-4 carbon atoms, alkoxy group, amino group, cyano group, nitro group, halogen atom, or the silicon-containing group represented by the formula (1).

As specific examples of compounds having therein said groups there can be cited phenylthiotrimethylsilane and phenylthiotriethylsilane.

### (g) Ether compounds (1):

- O - A³ (9)

In the formula (9), A³ is a monovalent saturated or unsaturated hydrocarbon grouphaving 1 - 6 carbon atoms, or the silicon-containing group represented by the formula (1), wherein said hydrocarbon group may be of a chain structure or cyclic structure.

As specific examples of compounds having therein said groups there can be cited methoxytrimethylsilane, hexamethyldisiloxane, and pentamethyldisiloxane.

### (h) Ether compounds (2):

- B - O - A³ (10)

In the formula (10), A³ and B are the same as the groups shown in the aforementioned formulae (8) and (9), respectively.

As specific examples of compounds having therein said groups there can be cited methoxymethyltrimethylsilane.

### (i) Silane compounds:

- D (11)

In the formula (11), D is any group selected from the group consisting of halogen atom, hydrogen atom, a saturated or unsaturated hydrocarbon group having 1 - 6 carbon atoms, acetyl group and the silicon-containing group represented by the formula (1). Wherein said hydrocarbon group may be of a chain structure or cyclic structure and part of hydrogen atoms in the group may be substituted with halogen atom or alkoxy group.

As specific examples of compounds having therein said groups there can be cited trimethylchlorosilane, butyldiphenylchlorosilane, trifluoromethyl-trimethylsilane, acetyltrimethylsilane, 3-trimethylsilylcyclopentene, allyltrimethylsilane, and vinyltrimethylsilane.

### (j) Carbamate compounds:

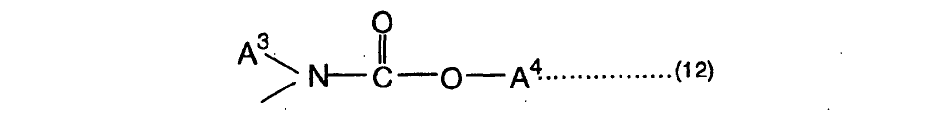

In the formula (12), A³ is the same as the group shown in the aforementioned formula (9) and A⁴ is a saturated or unsaturated hydrocarbon group having 1 - 6 carbon atoms.

As specific examples of compounds having therein said groups there can be cited methyl-N-trimethylsilyl carbamate, methyl-N,N-bistrimethylsilyl carbamate, ethyl-N-trimethylsilyl carbamate, methyl-N-triethylsilyl carbamate, and vinyl-N-trimethylsilyl carbamate.

### ( k ) Chain carbonate compounds:

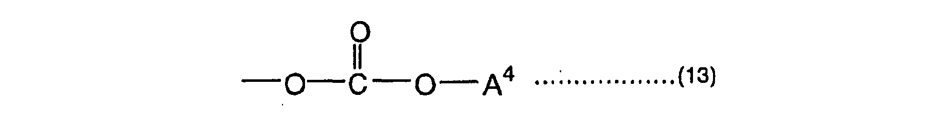

In the formula (13), A⁴ is the same as the group shown in the aforementioned formula (12).

As specific examples of compounds having therein said groups there can be cited methyltrimethylsilyl. carbonate, allyltrimethylsilyl carbonate, and ethyl-trimethylsilyl carbonate.

### (l) Other compounds:

- B - D (14)

In the formula (14), B and D are the same as the groups shown in the aforementioned formulae (8) and (11), respectively.

As specific examples of compounds having therein said groups there can be cited hexamethyldisilazane.

Among the aforementioned compounds having therein a silicon-containing group, the compound of (b), (c), (d), (i), (j) and (k) are preferable.

Out of the compounds, preferred for the present invention is any compound selected from the group consisting of N-trialkylsilylimidazole, tris(trialkylsilyl) phosphate, 4-trialkylsilylmethyl-1,3-dioxolan-2-one, trialkylchlorosilane, trifluoroalkyltrialkylsilane, allyltrialkylsilane, diallyldialkylsilane, triallylalkylsilane, acetyltrialkylsilane, alkyl-N-trialkylsilyl carbamate, alkyl-N,N-bistrialkylsilyl carbamate, and alkyltrialkylsilyl carbonate.

As preferred specific examples among the compounds there can be cited N-trimethylsilylimidazole, tris(trimethylsilyl) phosphate, allyltrimethylsilane, 4-trimethylsilylmethyl-1,3-dioxolan-2-one, methyl-N-trimethylsilyl carbamate, methyl-N,N-bistrimethylsilyl carbamate and methyltrimethylsilyl carbonate.

In the present invention 3-trialkylsilyl-2-oxazolidinone such as 3-trimethylsilyl-2-oxazolidinone is preferably used, too.

A single kind of silicon compound may be used individually or two or more kinds may be used in combination.

The silicon compound shown in the formula (2) is chemically stable and highly acid-proof, will be hardly oxidized when allowed to stand in the air, and is less likely to react with water or such highly reactive substance as metallic lithium under normal storage conditions. Furthermore, such silicon compound possesses such properties that it is physically stable and resistive to thermal decomposition, exhibits low flammability and is hardly susceptible to electrochemical oxidation and reduction. Besides, thosesilicon compounds have relatively high flash point, and hence, their safety against fires is excellent.

### Solvent for Electrolyte

According to the present invention said silicon compound is used singularly or in the form of a mixed solvent prepared in combination with another solvent as the solvent for electrolyte. In cases where it is used in the form of the mixed solvent it is preferable that the silicon compound shown in the aforementioned formula (2) is admixed with another solvent by 0.01- 50 % by weight, or preferably 0.1 - 30 % by weight, in the solvent. Since electrochemically and physically stable solvent for electrolyte is prepared, the obtained solvent gives improved flame resistance so long as the mixing ratio is adjusted within said ranges.

As such other solvent that can be used in said mixed solvent, any compound may be optionally selected from among the below-exemplified cyclic carbonic esters, chain carbonic esters, cyclic esters, chain esters, cyclic ethers, chain ethers, phosphoric esters, and sulfur-containing compounds.

### (1) Cyclic carbonic esters:

Ethylene carbonate (syn.: 1,3-dioxolan-2-one), propylene carbonate (syn.: 4-methyl-1,3-dioxolan-2-one), butylene carbonate (syn.: 4,5-dimethyl-1,3-dioxolan-2-one), and vinylene carbonate, etc.

Cyclic carbonic esters may be also those which have alkyl groups wherein hydrogen atoms are substituted with halogen atoms such as monofluoromethylethylene carbonate, difluoromethylethylene carbonate, and trifluoromethylethylene carbonate.

### (2) Chain carbonic esters:

Dimethyl carbonate, methylethyl carbonate, diethyl carbonate, methylpropyl carbonate, and methylisopropyl carbonate, etc.

### (3) Cyclic esters:

γ-butyrolactone, γ-valerolactone, 3-methyl-γ-butyrolactone, and 2-methyl-γ-butyrolactone, etc.

### (4) Chain esters:

Methyl formate, ethyl formate, methyl acetate, ethyl acetate, propyl acetate, methyl propionate, methyl butyrate, and methyl valerate, etc.

### (5) Cyclic ethers:

1,4-Dioxane, 1,3-dioxolane, terahydrofuran, 2-methyltetrahydrofuran, 3-methyl-1,3-dioxolane, and 2-methyl-1,3-dioxolane, etc.

### (6) Chain ethers:

1,2-Dimethoxyethane, 1,2-diethoxyethane, diethyl ether, dimethyl ether, methylethyl ether, and dipropyl ether, etc.

### (7) Phosphoric esters:

Trimethyl phosphate, triethyl phosphate, and triallyl phosphate, etc.

### (8) Sulfur-containing compounds:

Sulfolane, etc.

It is preferable to use cyclic carbonic ester and/or phosphoric ester among the solvents with a view to furthermore improving charging/discharging cycle properties and low flammability of the solvent. Moreover, those solvents may be used singularly or in combination of two or more kinds.

### Electrolyte

Ammonium salts, phosphonium salts and the like can be used as the electrolyte contained in the non-aqueous electrolytic solution of the present invention. They may be used either singularly or in combination of two or more kinds. As specific examples of such electrolytes there can be cited the following compounds.

### (1) Ammonium salts:

Tetrabutylammonium tetrafluoroborate ((C₄H₉)₄ NBF₄), tetraethylammonium tetrafluoroborate ((C₂H₅)₄ NBF₄), triethyl-monomethylammonium tetrafluoroborate ((C₂H₅)₃ (CH₃) NBF₄), tetrabutylammonium hexafluorophosphate ((C₄H₉)₄ NPF₆), tetraethylammonium hexafluorophosphate ((C₂H₅)₄NPF₆), and triethyl-monomethylammonium hexafluorophosphate ((C₂H₅)₃ (CH₃) NPF₆), etc.

### (2) Phosphonium salts:

Tetrabutylphosphonium tetrafluoroborate ((C₄H₉)₄PBF₄), tetraethylphosphonium tetrafluoroborate ((C₂H₅)₄ PBF₄), tetrabutylphosphonium hexafluorophosphate ((C₄H₉)₄ PPF₆), and tetraethylphosphonium hexafluorophosphate ((C₂H₅)₄ PPF₆), etc.

### (3) Electrolytes described in International Publication No. WO 95/15572, etc.:

Among the compounds preferred ones are tetrabutylammonium tetrafluoroborate ((C₄H₉)₄ NBF₄), tetraethylammonium tetrafluoroborate ((C₂H₅)₄ NBF₄), and triethyl-monomethylammonium tetrafluoroborate ((C₂H₅)₃ (CH₃)NBF₄). It is preferable that the electrolyte is contained in the eletrolytic solution by a concentration of generally 0.1 - 3 mole/liter, or preferably 0.3 - 1.5 mole/liter.

### Electrodes and Capacitor

The non-aqueous electrolytic solution of the present invention is used for capacitors at large including the aluminum electrolytic capacitor, and particularly it is used suitably for the electric double layer capacitor.

The construction of the electric double layer capacitor is such that it is composed of two leaves of electrodes, a separator, and generally a corrosion resistant electrolytic solution. Specifically, two leaves of electrodes are disposed face-to-face with a separator being interposed in between; and the spaces between the electrode and the porous separator and the interior of the porous separator are filled with the electrolytic solution.

The electrode is constructed of a material having a large surface area like activated carbon and a binder such as fluoroplastic. The kinds of such activated carbon as is preferably used as the material for the electrode are generally phenolic-based, pitch-based, polyacrylonitrile-based, palm shell-derived or coke-based in either the filament form or the powder form. Normally, activated carbon having a specific surface area of 1000 m²/g or more is preferred. Such activated carbon is used after it has been activated by the steam activation method or the alkali activation method.

As the binder there are used such materials as carboxymethyl cellulose, poly(vinylidene fluoride), poly(vinylpyrrolidone), polyimide, poly(vinyl alcohol), and polyacrylic acid. The material for the electrode is bound by a binder and rendered into an intended shape to be obtained as a fabricated electrode.

The electrode is also put in use after it has been pre-treated with said non-aqueous electrolytic solution. The pre-treatment may be carried out by spraying the non-aqueous electrolytic solution onto the electrode or by immersing the electrode in the non-aqueous electrolytic solution. It is by this pre-treatment that the efficiency of wetting may be increased between the electrode and the non-aqueous electrolytic solution and the stability of the electrode surface may be enhanced, and then the capacity of the capacitor may be that much more increased. It is preferable that the thus pre-treated electrode is used at least on either side of the anode or the cathode, while such electrode may be used in various capacitors at large besides the electric double layer capacitor.

The electrode is often used in a combination of said material for the electrode (the active substance) and a collector body. As such collector body, for example, aluminum foil is preferably used. As for the separator, on the other hand, preferably used are such materials as porous film made from polyethylene, polypropylene, and the like, kraft paper, manila paper, and glass filter.

The non-aqueous electrolytic solution of the present invention may also be usable for a metal surface treatment of the collector body, and then a metal corrosion of the collector body is restrained by the treatment.

An explanation about the construction of, for example, a roll-up type electric double layer capacitor element is furnished as follows. Namely, it is of such construction that the separator is interposed between the polarizable anode to which an anode-side conducting wire is connected and the polarizable cathode to which a cathode-side conducting wire is connected, which in a three-layer stock are rolled up together. Rubber-made closure members are prepared for threading the anode-side conducting wire and the cathode-side conducting wire therethrough, respectively. After the capacitor element has been immersed in a driving electrolytic solution, it is inserted into an aluminum cylindrical container provided with a bottom. By means of carrying out horizontal drawing and curling jobs at the opening part of the metal container, the closure members are tightly sealed to the opening part of the metal container.

### Examples

The present invention will be illustrated in details with reference to the following examples; however, the scope of the invention is not limited by the examples.

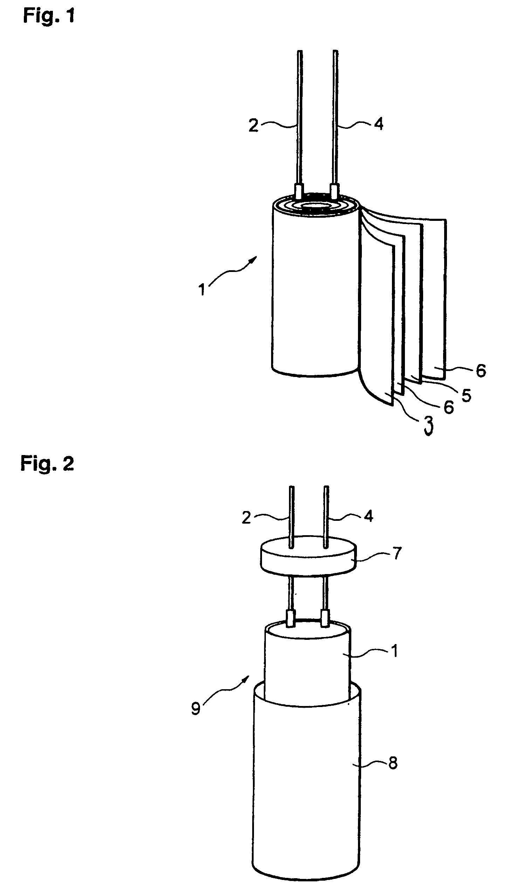

Explanations are furnished as follows in reference to Figure 1 and Figure 2, respectively, about the method of fabricating the roll-up type electric double layer capacitor used in Examples and Comparative Example.

The capacitor element (1) was fabricated as illustrated in Figure 1 by rolling up together into a cylindrical shape the polarizable anode (3), the polarizable cathode (5) and the separator (6) being interposed in between the two. Said polarizable electrodes were each produced by adding acetylene black and carboxymethyl cellulose to an activated carbon powder, dispersing the mixed powder in water to reduce to a slurry, coating the slurry onto an aluminum foil whose surface had been roughened in advance, and then drying the coated foil.

The capacitor element (1) was impregnated with the electrolytic solution prepared in accordance with the procedure specified in each Example, and was inserted into the cylindrical aluminum container (8) provided with bottom as illustrated in Figure 2. In the meantime, the anode-side conducting wire (2) was connected to the polarizable anode (3), and the cathode-side conducting wire (4) was connected to the polarizable cathode (5). Each conducting wire was put through the rubber-made closure member (7), and then the closure member (7) was attached to the opening part of the cylindrical container (8). The opening part was tightly sealed with the closure member (7) by horizontal drawing and curling jobs. Thus was fabricated a roll-up type electric double layer capacitor (9). The thus fabricated capacitor had a diameter of 18 mm and a height of 40 mm.

### Example 1

25 ml of an electrolytic solution having an electrolyte concentration of 0.5 mole/liter was prepared by dissolving 2.71 g (0.0125 mole) of tetraethylammonium tetrafluoroborate ((C₂H₅)₄ NBF₄) in a mixed solvent prepared by admixing propylene carbonate with N-trimethylsilylimidazole at a ratio of 95 : 5 by weight. The obtained electrolytic solution was tested with respect to a leakage current. Test results are shown in Table 1.

The leakage current was determined in accordance with the following procedure. Said electrolytic solution was put into a tripolar withstand voltage tester cell in which activated carbon electrodes were installed as an active electrode and an opposite electrode and an Ag/Ag⁺ electrode was used as an reference electrode. Then, 2.0 V voltage was impressed on it, using a potentiogalvanostat. When a flow of electricity had become constant, an amperage was measured and recorded as the leakage current value.

Next, an electric double layer capacitor having a 2.3V and 50F rating was fabricated using said electrolytic solution. Thereupon, 2.5 V was impressed at an ambient temperature of 70°C, and a time-related dimensional change of the cylindrical container caused by gases built up in said atmosphere was measured as "a dimensional change of the product". The dimensional changes after the lapse of 500 hrs from the beginning of such elevated temperature load test are also shown in Table 1.

### Example 2

The same procedure as in Example 1 was followed except that trimethyl phosphate was used in place of propylene carbonate as in Example 1 for determining the leakage current of the electrolytic solution and the dimensional change of the product by the elevated temperature load test. Test results are shown in Table 1.

### Example 3

The same procedure as in Example 1 was followed except that 3-trimethylsilyl-2-oxazolidinone was used in place of N-trimethylsilylimidazole as in Example 1 for determining the leakage current of the electrolytic solution and the dimensional change of the product by the elevated temperature load test. Test results are shown in Table 1.

### Example 4.

The same procedure as in Example 1 was followed except that tris(trimethylsilyl) phosphate was used in place of N-trimethylsilylimidazole as in Example 1 for determining the leakage current of the electrolytic solution and the dimensional change of the product by the elevated temperature load test. Test results are shown in Table 1.

### Example 5

The same procedure as in Example 4 was followed except that trimethyl phosphate was used in place of propylene carbonate as in Example 4 for determining the leakage current of the electrolytic solution and the dimensional change of the product by the elevated temperature load test. Test results are shown in Table 1.

### Example 6

The same procedure as in Example 5 was followed except that a mixed solvent prepared by admixing trimethyl phosphate with tris(trimethylsilyl) phosphate at a ratio of 99 : 1 by weight was used for determining the leakage current of the electrolytic solution and the dimensional change of the product by the elevated temperature load test. Test results are shown in Table 1.

### Example 7

The same procedure as in Example 2 was followed except that trimethylchlorosilane was used in place of N-trimethylsilylimidazole as in Example 2 for determining the leakage current of the electrolytic solution and the dimensional change of the product by the elevated temperature load test. Test results are shown in Table 1.

### Example 8

The same procedure as in Example 2 was followed except that allyltrimethylsilane was used in place of N-trimethylsilylimidazole as in Example 1 for determining the leakage current of the electrolytic solution and the dimensional change of the product by the elevated temperature load test. Test results are shown in Table 1.

### Example 9

The same procedure as in Example 2 was followed except that methyl-N-trimethylsilylcarbamate was used in place of N-trimethylsilylimidazole as in Example 1 for determining the leakage current of the electrolytic solution and the dimensional change of the product by the elevated temperature load test. Test results are shown in Table 1.

### Comparative Example 1

An electrolytic solution was prepared in accordance with the same procedure as in Example 1 except that only propylene carbonate was used in place of a mixed solvent consisting of propylene carbonate and N-trimethylsilylimidazole as in Example 1. The thus prepared electolytic solution was tested with respect to the leakage current of the electrolytic solution. Test results are shown in Table 1.

**Table 1**

| | Kind of Solvent for Electrolyte (Ratio by weight) | Leakage Current (µA) | Dimensional Change of the Product (mm) |
|---|---|---|---|
| Example 1 | Propylene carbonate vs. N-trimethylsilylimidazole = 95 : 5 | 180 | 1.5 |
| Example 2 | Trimethyl phosphate vs. N-trimethylsilylimidazole = 95 : 5 | 270 | 1.7 |
| Example 3 | Propylene carbonate vs. 3-trimethylsilyl-2-oxazolidinone = 95 : 5 | 270 | 1.6 |
| Example 4 | Propylene carbonate vs. Tris(trimethylsilyl)-phosphate = 95 : 5 | 90 | 1.4 |
| Example 5 | Trimethyl phospate vs. Tris(trimethylsilyl)-phosphate = 95 : 5 | 140 | 1.5 |
| Example 6 | Trimethyl phosphate vs. Tris(trimethylsilyl)-phosphate = 99 : 1 | 250 | 1.6 |
| Example 7 | Trimethyl phosphate vs. Trimethylchlorosilane = 95 : 5 | 150 | 1.8 |
| Example 8 | Propylene carbonate vs. Allyltrimethylsilane = 95 : 5 | 80 | 1.2 |
| Example 9 | Propylene carbonate vs. Methy-N-trimethylsilyl-carbamate = 95 : 5 | 130 | 1.5 |
| Comparative Example 1 | Propylene carbonate = 100 | 280 | 2.1 |

From Table 1 it is known that the electrolytic solutions in Examples 1 - 9 exhibit less leakage current than that of Comparative Example 1, and hence superior with respect to the withstand voltage. Furthermore, they showed less dimensional changes of the product by the elevated temperature load test than that in case of Comparative Example 1.

### Possibility of the Industrial Utilization:

The non-aqueous electrolytic solution of the present invention, by virtue of the silicon compound-containing solvent for electrolyte used therein, when it is utilized for the capacitor, proves itself to be the electrolytic solution which releases only little gases at an elevated temperature, gives high withstand voltage and exhibits excellent charging /discharging cycle properties. Additionally, said solvent for electrolyte has a higher flash point and it shows an excellent safety against fires.

The capacitor employing such non-aqueous electrolytic solution gives high withstand voltage, excellent charging/ discharging cycle properties, and high energy density. Moreover, such capacitor has a long service life and the excellent safety against fires. On account of the above-mentioned advantages, such capacitor employing said non-aqueous electrolytic solution is suitable particularly for the electric double layer capacitor.

Furthermore, a capacity of the capacitor may be augmented due to increasing of the stability of the electrode surface by treating the electrodes with such non-aqueous electrolytic solution in advance and thus may be obtained a capacitor having a higher efficiency.

## Claims

1. A non-aqueous electrolytic solution for a capacitor comprising an electrolyte and a solvent for the electrolyte comprising a compound having therein a silicon-containing group represented by the following formula (1), 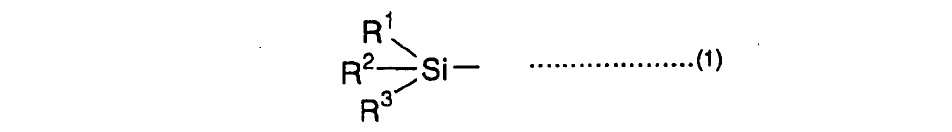 wherein R¹, R², and R³ are each a monovalent group selected from the group consisting of hydrogen atom, halogen atom, hydrocarbon group having 1 - 6 carbon atoms, and oxyhydrocarbon group having 1 - 6 carbon atoms, wherein a hydrocarbon portion of said hydrocarbon group or oxyhydrocarbon group may be of a chain structure or cyclic structure and may be saturated or unsaturated and part of hydrogen atoms in the hydrocarbon portion may be substituted with halogen atom, and
R¹, R², and R³ may be the same or different.

2. A non-aqueous electrolytic solution for a capacitor as claimed in claim 1, wherein R¹, R², and R³ in the silicon-containing group of the formula (1) are each a saturated or unsaturated hydrocarbon group having 1 - 6 carbon atoms.

3. A non-aqueous electrolytic solution for a capacitor as claimed in claim 1, wherein R¹, R², and R³ in the silicon-containing group of the formula (1) are each an alkyl group having 1 - 3 carbon atoms which are the same.

4. A non-aqueous electrolytic solution for a capacitor as claimed in claim 1, wherein R¹, R², and R³ in the silicon-containing group of the formula (1) are selected from the group consisting of methyl group, ethyl group, and trifluoromethyl group.

5. A non-aqueous electrolytic solution for a capacitor as claimed in any claim of claims 1 - 3, wherein the compound having therein the silicon-containing group of the formula (1) is represented by the following formula (2), 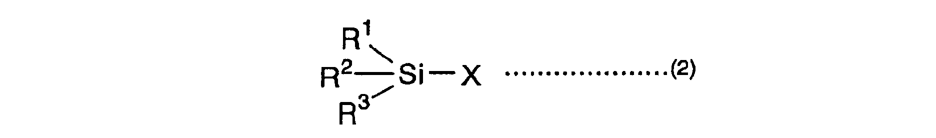 wherein X is any group selected from the group consisting of the groups represented by the following formulae (3) - (14), respectively,
(a) 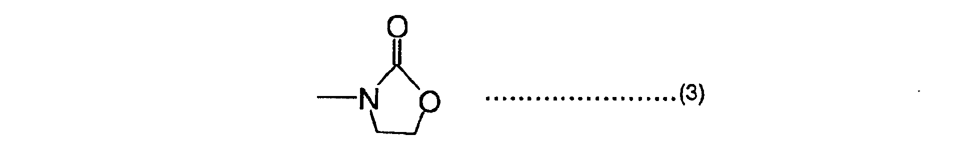 in the formula (3), part of hydrogen atoms may be substituted with a saturated or unsaturated hydrocarbon group having 1 - 4 carbon atoms, alkoxy group, amino group, cyano group, nitro group or halogen atom,
(b) 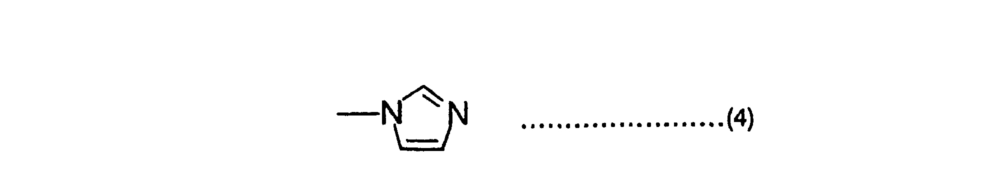 in the formula (4), part of hydrogen atoms may be substituted with a saturated or unsaturated hydrocarbon group having 1 - 4 carbon atoms, alkoxy group, amino group, cyano group, nitro group or halogen atom,
(c) 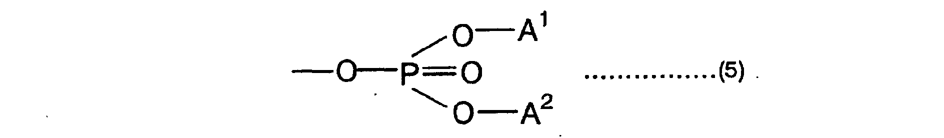 in the formula (5), A¹ and A² are each saturated or unsaturated hydrocarbon group having 1 - 6 carbon atoms or the silicon-containing group of the formula (1) which may be the same or different,
(d) 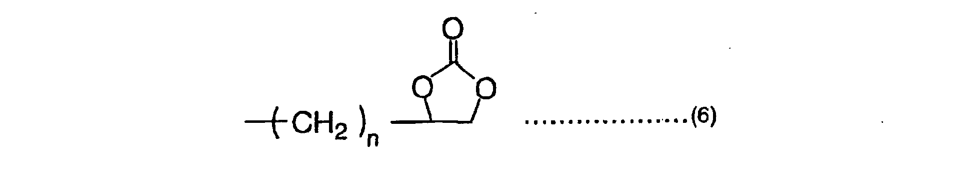 in the formula (6), part of hydrogen atoms which are bonded to carbon atoms constituting the cyclic structure may be substituted with a saturated or unsaturated hydrocarbon group having 1 - 4 carbon atoms, alkoxy group, amino group, cyano group, nitro group, halogen atom, or the silicon-containing group of the formula (1), wherein "n" is a number of 0, 1, or 2,
(e) 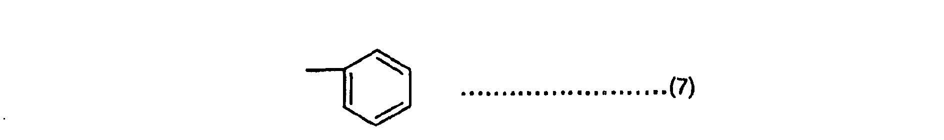 in the formula (7), part of hydrogen atoms which are bonded to carbon atoms constituting the benzene ring may be substituted with a saturated or unsaturated hydrocarbon group having 1 - 4 carbon atoms, alkoxy group, amino group, cyano group, nitro group, halogen atom, or the silicon-containing group of the formula (1),
(f) 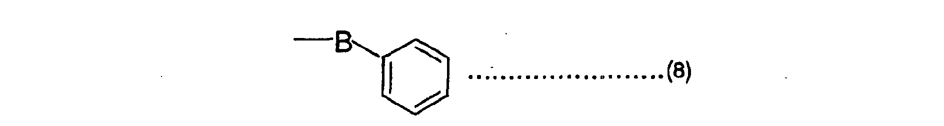 in the formula (8), B is any bivalent group selected from the group consisting of - NH -, - N(CH₃) -, - CH₂-, - CO -, - S -, and - SO₂-, wherein part of hydrogen atoms which are bonded to carbon atoms constituting the benzene ring may be substituted with a saturated or unsaturated hydrocarbon group having 1 - 4 carbon atoms, alkoxy group, amino group, cyano group, nitro group, halogen atom, or the silicon-containing group of the formula (1),
(g)
- O - A³ (9)
in the formula (9), A³ is a saturated or unsaturated monovalent hydrocarbon group having 1 - 6 carbon atoms, or the silicon-containing group of the formula (1), wherein said hydrocarbon group may be of a chain structure or cyclic structure,
(h)
- B - O - A³ (10)
in the formula (10), A³ and B are the same as the groups shown in the formulae (8) and (9), respectively,
(i)
- D (11)
in the formula (11), D is any group selected from the group consisting of halogen atom, hydrogen atom, a saturated or unsaturated monovalent hydrocarbon group having 1 - 6 carbon atoms, acetyl group, and the silicon-containing group of the formula (1), wherein part of hydrogen atoms in said hydrocarbon group may be substituted with halogen atom or alkoxy group,
(j) 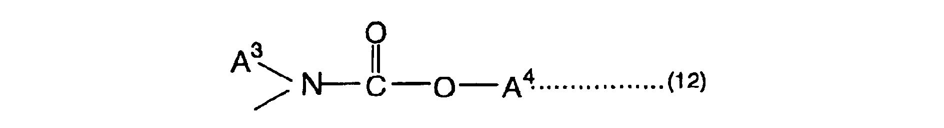 in the formula (12), A³ is the same as the group shown in the aforementioned formula (9) and A⁴ is a saturated or unsaturated hydrocarbon group having 1 - 6 carbon atoms,
(k) 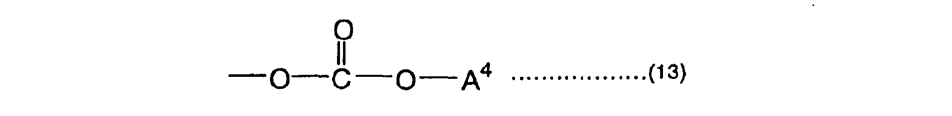 in the formula (13), A⁴ is the same as the group shown in the formula (12),
and
(l)
- B - D (14)
in the formula (14), B and D are the same as the groups shown in the formulae (8) and (11), respectively.

6. A non-aqueous electrolytic solution for a capacitor as claimed in claim 5, wherein the compound of the formula (2) is any compound selected from the group consisting of N-trialkylsilylimidazole, tris(trialkylsilyl) phosphate, 4-trialkylsilylmethyl-1,3-dioxolan-2-one, trialkylchlorosilane, trifluoroalkyltrialkylsilane, allyltrialkylsilane, diallyldialkylsilane, triallylalkylsilane, acetyltrialkylsilane, alkyl-N-trialkylsilyl carbamate, alkyl-N,N-bistrialkylsilyl carbamate, alkyltrialkylsilyl carbonate, and 3-trialkylsilyl-2-oxazolidinone.

7. A non-aqueous electrolytic solution for a capacitor as claimed in claim 5, wherein the compound of the formula (2) is any compound selected from the group consisting of N-trimethylsilylimidazole, tris(trimethylsilyl) phosphate, allyltrimethylsilane, 4-trimethylsilylmethyl-1,3-dioxolan-2-one, methyl-N-trimethylsilyl carbamate, methyl-N,N-bistrimethylsilyl carbamate, methyltrimethylsilyl carbonate, and 3-trimethylsilyl-2-oxazolidinone.

8. A non-aqueous electrolytic solution for a capacitor as claimed in any claim of claims 1 - 7, wherein said solvent for the electrolyte comprises a mixed solvent prepared by admixing the compound of the formula (2) with a cyclic carbonic ester and/or phosphoric ester.

9. A non-aqueous electrolytic solution for a capacitor as claimed in any claim of claims 1 - 8, wherein said solvent for the electrolyte comprises the compound of the formula (2) by 0.01 - 50 % by weight.

10. A non-aqueous electrolytic solution for a capacitor as claimed in any claim of claims 1 - 9, wherein said capacitor is an electric double layer capacitor.

11. A capacitor which comprises a non-aqueous electrolytic solution for a capacitor as claimed in any claim of claims 1 - 9.

12. An electric double layer capacitor which comprises a non-aqueous electrolytic solution for a capacitor as claimed in any claim of claims 1 - 9.

13. An electrode for a capacitor which is pre-treated with an electrolytic solution as claimed in any claim of claims 1 - 9.

14. A capacitor wherein at least one electrode partly constituting such capacitor is an electrode as claimed in claim 13.
